# EUROPÄISCHE PATENTSCHRIFT

(11) **EP 0 648 714 B1**
(45) Veröffentlichungstag und Bekanntmachung des Hinweises auf die Patenterteilung: **10.07.1996**
(21) Anmeldenummer: 94114887.6
(22) Anmeldetag: 21.09.1994
(51) Int. Cl.: C03C 12/00, C03C 21/00

(54) **Verwendung chemisch gehärteter Silikatischermaterialen abriebfester Mahlkörper**
Use of chemically hardened silicons materials as abrasion-resistant grinding bodies
Utilisation de matérieux silicieux trempés chimiquement comme corps broyants résistants à l'abrasion

(30) Priorität: 18.10.1993 DE 4335462
(43) Veröffentlichungstag der Anmeldung: 19.04.1995
(73) Patentinhaber: Dragon-Werk Georg Wild GmbH & Co. KG, D-95448 Bayreuth (DE)
(72) Erfinder: Schlicke, Jürgen, D-63633 Birstein (DE); Hitzschke, Ralf-Peter, D-98693 Ilmenau (DE)
(74) Vertreter: Reinhard - Skuhra - Weise & Partner

(56) Entgegenhaltungen:
- DE-A- 1 925 453
- DE-A- 2 142 673
- GLASS AND CERAMICS, Bd.50, Nr.7-8, Juli 1993, NEW YORK US Seiten 275 - 279 V.V.BUDOV ET AL. 'Glass Microbeads, Application, Properties and Technology (Review)'

## Beschreibung

Die Anmeldung betrifft die Verwendung chemisch gehärteter silikatischer Materialien als abriebfeste Mahlkörper.

Es ist bekannt, daß Kugeln aus silikatischem Material durch Pressen, Gießen aber auch durch Freiformung in wärmeführenden Kammern herstellbar sind. Ob die Freiformung in einem Drehrohr, Gasofen, direkt in Gas bzw. Plasmastrahlen oder aber nach Formung eines Tropfens durch Abkühlung seine Kugelform erhält, ist von der Größe der herzustellenden Kugeln abhängig. In zahlreichen Patenten sind solche Verfahren beschrieben, um Glaskugeln zu erhalten, die als Reflexperlen oder auch als Mahlkörper dienen.

Die Begriffe chemische Härtung und chemische Verfestigung sind in der Fachliteratur gleichbedeutend. Die chemische Verfestigung wird hauptsächlich in der Glasliteratur verwendet, und im Patentwesen wird der Begriff der chemischen Härtung benutzt. Die chemische Härtung von Glasgegenständen (nicht von Mahlkörpern!) gehört zum Stand der Technik.

Es ist bekannt, daß durch unterschiedlichste Verfahren unterhalb der Transformationstemperatur (Tg) kleinere Alkali-Ionen durch größere ersetzt werden können, z.B. Lithium- bzw. Natriumionen durch Natrium- bzw. Kaliumionen. Oberhalb der Transformationstemperatur werden größere Ionen des Glases durch kleinere Ionen der Salzschmelze ersetzt, wodurch bei Abkühlung ebenfalls Druckspannungen entstehen. Diese allgemein bekannten Verfahren führen zu Einhärtetiefen von 20 µm - 150 µm und laut Kühne ("Werkstoff Glas", Akademieverlag, Berlin 1984) zu einer etwa 5 - 10fachen Festigkeit. Mit derartigen chemischen Härteverfahren hergestellte Glasgegenstände werden beispielsweise in den deutschen Offenlegungsschriften 30 01 460, 30 10 103, 32 12 612, 30 12 337 und 38 40 071 beschrieben. Bei diesen Gegenständen handelt es sich jedoch nicht um Mahlkörper. Die aus dem Stand der Technik bekannten Mahlkörper wurden nämlich ausschließlich durch thermische Härtung hergestellt (vgl. DE-A-19 25 453).

In der die Mahlkörper betreffenden Fachliteratur wird ausgesagt, daß die Erhöhung der Härte zu einer verminderten Abriebfestigkeit führt. Hinz sagt im Silikatlexikon (1985, Akademieverlag, Berlin, S. 326), "daß die Druckspannungszone nur eine geringe Tiefe hat (in der Praxis 20 ....150 µm) und die Zugspannungszone sehr breit, dafür jedoch von geringer Intensität ist. Als Nachteil ergibt sich hieraus, daß die Druckspannungszone gegen Abrasion keinen zuverlässigen Schutz bietet".

Kühne geht im Buch Werkstoffe Glas (1984, Akademieverlag, Berlin, S. 158/159) noch weiter: "Eine hohe Schleifhärte (hohe Abriebfestigkeit) läuft danach nicht konform mit den Härtewerten, ganz im Gegenteil ergeben sich sogar umgekehrte Abhängigkeitsverhältnisse."

Die aus dem Stand der Technik bekanten Mahlkörper weisen den Nachteil auf, daß sie eine nur unzureichende Abriebfestigkeit zeigen.

Aus der DE-A-21 42 673 sind Steinchen, z. B. Kügelchen oder Kugeln, aus glasartigem und vitrokristallinem Material bekannt. In den Beispielen 1 bis 4 und 6 der DE-A-21 42 673 werden Glaskugeln offenbart, die ein Verhältnis von gehärteter zu ungehärteter Glasmasse von > 10 % aufweisen. Diese Kügelchen oder Kugeln aus glasartigem Material sollen beispielsweise bei Straßenreflektoren und zur Verstärkung von Thermoplasten verwendet werden. Die optischen Eigenschaften der Kugeln werden näher beschrieben. Weiterhin wird die Verwendung glasartiger, kugelförmiger Materialien bei der Sandbehandlung oder Oberflächenreinigung beschrieben. Derartige Materialien sollen ausgezeichnete mechanische Eigenschaften, beispielsweise Bruch- oder Biegefestigkeit, aufweisen. Die Beispiele 2 bis 6 der DE-A-21 42 673 offenbaren Glaskugeln, die zur Erreichung einer Zugfestigkeitssteigerung chemisch gehärtet sind.

Es ist eine Aufgabe der vorliegenden Erfindung, neue Mahlkörper bereitzustellen, die eine höhere Abriebfestigkeit aufweisen.

Diese Aufgabe wird erfindungsgemäß durch die Verwendung von kugelförmigen, der chemischen Härtung zugänglichen, chemisch gehärteten silikatischen Materialien mit einem Verhältnis von gehärteter zu ungehärteter silikatischer Masse > 10 % als abriebfeste Mahlkörper gelöst.

Der erfindungsgemäß verwendete Mahlkörper weist bevorzugt einen Durchmesser (d) von 0,05 mm ≦ d ≦ 10 mm, weiter bevorzugt von 0,1 mm ≦ d ≦ 5 mm, auf.
Das Verhältnis von gehärteter zu ungehärteter silikatischer Masse beträgt bevorzugt > 15 %.

Das silikatische Material kann ein Glas oder Zirkonsilikat sein, wobei auch andere silikatische Materialien, die dem Fachmann bekannt sind, verwendbar sind. Der Mahlkörper ist bevorzugt kugelförmig ausgebildet.

Die chemische Härtung wird in einer dem Fachmann an sich bekannten Weise durchgeführt, wobei das Verfahren so gesteuert wird, daß ein Verhältnis von gehärteter zu ungehärteter silikatischer Masse von > 10 % erreicht wird. Bevorzugt ist das Verhältnis > 15%.

In einem bevorzugten Verfahren erfolgt die chemische Härtung durch Eintauchen in eine Schmelze aus Kaliumnitrat oder durch Aufsprühen einer Schmelze aus Kaliumnitrat auf den Mahlkörper.

Silikatische Kugeln als Mahlkörper werden im Warmzustand geformt und müssen danach abgekühlt werden. Es liegt nahe, dies sehr schnell zu machen und damit diese Kugeln thermisch zu härten. In der Praxis gab man heiße Kugeln in ein Ölbad und erreichte bei der schockartigen Abkühlung eine Druckspannungszone bis ca. 0,5 mm Dicke. Der Nachteil dabei war, daß Kugelbruch bei der schockartigen Abkühlung als auch im Einsatz als Mahlkörper auftrat und die Kugelbruchstücke, z.B. im Autolack, störten. Für den Fachmann lag es nicht nahe von der einfachen Methode des thermischen Härtens zu der aufwendigeren des chemischen Härtens überzugehen, da die dabei erzielbaren Druckspannungszonen wesentlich dünner sind und maximal 0,15 mm Dicke betragen. Man hat dabei aber übersehen, daß das chemische Härten trotz dünnerer Druckspannungszone und höherem Aufwand Vorteile bietet und der Kugelbruch nicht mehr auftritt.

Die DE-A-32 12 612 beschreibt die chemische Härtung von Gläsern, in diesem Fall Uhrgläsern, zur Erhöhung der Kratzfestigkeit, wobei durch die chemische Härtung zwar ein bestimmtes Verhältnis von gehärtetem zu ungehärtetem Glas erhalten, aber nicht bewußt eingestellt wird. Erfindungsgemäß wurde nunmehr überraschend gefunden, daß es bei völlig anderen Gegenständen, nämlich bei Mahlkörpern aus Glas, durch chemische Härtung und Einstellung des Verhältnisses von > 10 % von gehärteter zu ungehärteter silikatischer Masse zu einer deutlichen Steigerung der Abriebfestigkeit kommt.

Das Verfahren zur Herstellung des erfindungsgemäßen abriebfesten Mahlkörpers aus silikatischem, chemisch härtbarem Material wird so durchgeführt, daß der Mahlkörper in an sich bekannter Weise durch Kationenaustausch bzw. Kationenverarmung in der Oberfläche chemisch gehärtet wird und das Verfahren so ausgeführt wird, daß ein Verhältnis von gehärteter zu ungehärteter silikatischer Masse > 10 % eingestellt wird.

Die chemische Härtung wird in der dem Fachmann bekannten Weise durchgeführt. Bevorzugt ist sie durch folgende Arbeitsschritte charakterisiert:
Gesäuberte und getrocknete Glaskugeln werden auf eine Temperatur von ca. 300 - 400°C vorgeheizt und anschließend in eine Kaliumnitratschmelze mit einer Temperatur von 360 - 490°C gegeben oder durch eine derartige Schmelze berieselt. Bei Sicherung einer möglichst konstanten Temperatur von ± 1 - 5 K wird das Verhältnis von gehärteter zu ungehärteter silikatischer Masse von > 10 % eingestellt, wobei die Härtezeit bevorzugt mehr als 4 Stunden beträgt. Nach der Entnahme und Abkühlung erfolgt eine Wäsche und Trocknung der Mahlkugeln.

Die Steuerung des Prozesses und damit die Einstellung des genannten Verhältnisses ist abhängig von der chemischen Zusammensetzung des Mahlkörpers, der Härtetemperatur, Diffusionsart, Härtezeit und dem Durchmesser der Mahlkörper. Erfindungsgemäß wurde somit überraschend gefunden, daß eine Proportionalität zwischen Härte und Abriebfestigkeit besteht und damit die Aussage der Fachliteratur (vergleiche oben) für derartige Mahlkörper unzutreffend ist.

Sogar Feststellungen, daß Kalzium²⁺-Ionen den chemischen Verfestigungsprozeß hemmen, treten völlig in den Hintergrund. Für kleine kugelförmige Mahlkörper kann festgestellt werden, daß die chemische Verfestigung der gesamten Oberfläche zu deutlich erhöhten Standzeiten als Mahlkörper führt und mechanische Defekte (Blasen, Risse oder Mikrorisse) in der Kugel nicht mehr die entscheidende Rolle spielen. Entgegen den Erfahrungen bei thermisch verfestigten Körpern kommt es nicht zu erhöhten Bruchausfällen, da die chemisch verfestigte Schicht allmählich aufgebaut wird und so mit einer Ausheilung von Defekten einhergeht, die zu keiner Reduzierung der Abriebfestigkeit führt.

Die geringe Schichtdicke der verspannten Zone bewahrt die Elastizität der Kugel, was sehr wichtig für die Abriebfestigkeit und damit Standzeit ist. Demgegenüber führt die dickere druckverspannte Zone bei thermisch gehärteten Kugeln zu einer Starrheit und geringeren Elastizität und damit zu höherem Abrieb und geringerer Standzeit.

Bei gleicher silikatischer Masse, gleicher chemischer Härtung und gleicher Einhärtetiefe steigt bei fallendem Durchmesser der kugelförmigen Mahlkörper (d.h. mit einer Zunahme des Verhältnisses von gehärteter zu ungehärteter silikatischer Masse) die Abriebfestigkeit der Mahlkörper überproportional an. Die Einhärtetiefe, die bei den Härtungsverfahren unterschiedlich ist, führt zu unterschiedlichen Standzeiten der Mahlkörper. Es wurde gefunden, daß die Abmahlung der gehärteten Schicht zu einem Spannungsabbau zwischen gehärteter und nicht gehärteter Masse führt. Der Übergang zwischen Druck- und Zugspannungszone ist folglich für den Mahlprozeß unproblematisch.

Die Erfindung wird im folgenden an Hand von Ausführungsbeispielen näher erläutert:

### 1. Ausführungsbeispiel:

Glaskugeln aus Alkali-Kalk-Glas (Tg= 480°C), folgender Zusammensetzung:

| | |
|---|---|
| SiO₂ | 65 - 72 % |
| CaO | 3 - 8 % |
| BaO | 4 - 8 % |
| K₂O | 2 - 8 % |
| Na₂O | 6 - 12 % |
| MgO | 0 - 3 % |
| B₂O₃ | 0 - 3 % |

mit einem Durchmesser von 3 mm werden gewaschen, auf 350°C vorgewärmt und anschließend bei 430°C ± 2K über 24 Stunden in einer Kaliumnitratschmelze gehärtet. Die Schichtdicke der gehärteten Glasschicht der Kugeln beträgt 50 µm.

Damit ist das Verhältnis zwischen gehärteter und ungehärteter Glasmasse gleich 10,7 %. Es wurde eine Probe von 500 g Glaskugeln einem Abriebtest (Einsatz einses Rührwerk bei 2000 U/min) unterworfen. Bei einem Abrieb der Mahlkugeln von 10 Masseprozent wurde bei chemisch gehärteten Mahlkugeln eine 7-fache Standzeiterhöhung im Vergleich zu ungehärteten Kugeln erzielt.

### 2. Ausführungsbeispiel:

Setzt man Kugeln kleineren Durchmessers, aber gleicher Zusammensetzung und gleicher chemischer Härtung, ein (analog Ausführungsbeispiel 1), so erhält man eine Steigerung der Abriebfestigkeit entsprechend dem Massenverhältnis zwischen gehärtetem und ungehärtetem Glas. Der Abriebtest der Mahlkugeln mit einem Durchmesser von 1 mm, einer Schichtdicke der gehärteten Schicht von 50 µm und einem Verhältnis von gehärteter Glasmasse zu ungehärteter Glasmasse von 37,2 % ergab bei einem Abrieb der Mahlkugeln von 10 Masseprozent eine 25-fache Erhöhung der Abriebfestigkeit im Vergleich zu ungehärteten Kugeln.

## Patentansprüche

1. Verwendung von kugelförmigen, der chemischen Härtung zugänglichen, chemisch gehärteten silikatischen Materialien mit einem Verhältnis von gehärteter zu ungehärteter silikatischer Masse > 10 % als abriebfeste Mahlkörper.

2. Verwendung nach Anspruch 1,
dadurch gekennzeichnet,
daß das Verhältnis von gehärteter zu ungehärteter silikatischer Masse > 15 % eingestellt wird.

3. Verwendung nach Anspruch 1 oder 2,
dadurch gekennzeichnet,
daß als silikatisches Material Glas eingesetzt wird.

4. Verwendung nach Anspruch 3,
dadurch gekennzeichnet,
daß das Glas die nachfolgenden Gehalte an SiO₂ und Na₂O aufweist:
| | |
|---|---|
| SiO₂ | > 50 % |
| Na₂O | 1 - 15 % |

5. Verwendung nach einem oder mehreren der vorhergehenden Ansprüche,
dadurch gekennzeichnet,
daß der Durchmesser (d) 0,05 ≦ d ≦ 10 mm, bevorzugt 0,1 ≦ d ≦ 5 mm, ist.

6. Verwendung nach einem oder mehreren der vorhergehenden Ansprüche,
dadurch gekennzeichnet,
daß der Mahlkörper in an sich bekannter Weise durch Kationenaustausch bzw. Kationenverarmung in der Oberfläche chemisch gehärtet wird und das Verfahren so ausgeführt wird, daß ein Verhältnis von gehärteter zu ungehärteter silikatischer Masse > 10 % eingestellt wird.

## Claims

1. Use as abrasion-resistant grinding bodies of spherical chemically hardened silicate materials available for chemical hardening having a ratio of hardened to unhardened silicate mass of >10 %.

2. Use according to claim 1, characterized in that the ratio of hardened to unhardened silicate mass is adjusted to > 15%.

3. Use according to claim 1 or 2, characterized in that glass is employed as said silicate material.

4. Use according to claim 3, characterized in that said glass contains the following amounts of SiO₂ and Na₂O:
| | |
|---|---|
| SiO₂ | > 50% |
| Na₂O | 1 - 15%. |

5. Use according to one or more of the preceding claims, characterized in that the diameter (d) is 0,05 ≦ d ≦ 10 mm, preferably 0,1 ≦ d ≦ 5 mm.

6. Use according to one or more of the preceding claims, characterized in that said grinding body is chemically hardened in a manner known per se by cation exchange or cation depletion in the surface thereof, respectively, and that the process is carried out in a manner, that a ratio of hardened to unhardened silicate mass is adjusted to > 10%.

## Revendications

1. Utilisation de matériaux sphériques aptes au durcissement chimique, de type silicicié, durcis chimiquement présentant un rapport pondéral de la partie siliciée durcie à la partie siliciée non durcie supérieurs à 10%, en tant qu'éléments broyeurs résistant à l'abrasion.

2. Utilisation selon la revendication 1, caractérisée en ce que le rapport pondéral de la partie siliciée durcie à la partie siliciée non durcie est ajusté à une valeur supécieure à 15%.

3. Utilisation selon la revendication 1 ou la revendication 2, caractérisée en ce qu'on utilise en tant que matériau silicié du verre.

4. Utilisation selon la revendication 3, caractérisée en ce que le verre présente les teneurs suivantes en SiO₂ et Na₂O :
| | |
|---|---|
| SiO₂ | > 50% |
| Na₂O | 1 - 15%. |

5. Utilisation selon l'une ou plusieurs des revendications précédentes, caractérisée en ce que le diamètre (d) est tel que 0,05 ≦ d ≦ 10 mm, de préférence 0,1 ≦ d ≦ 5 mm.

6. Utilisation selon l'une ou plusieurs des revendications précédentes, caractérisée en ce que l'élément broyeur est durci chimiquement en surface de façon connue en soi par échange de cations respectivement appauvrissement en cations et en ce que le procédé est exécuté de façon à ce que le rapport pondéral de la partie siliciée durcie à la partie siliciée non durcie puisse être ajustée à une valeur supérieure à 10%.
